# DEMANDE DE BREVET EUROPEEN

(11) **EP 3 757 891 A1**
(43) Date de publication de la demande: **30.12.2020**
(21) Numéro de dépôt: 19305841.9
(22) Date de dépôt: 25.06.2019
(51) Int. Cl.: G06K 19/07

(54) **PROCÉDÉ ET SYSTÈME DE PILOTAGE DE PÉRIPHÉRIQUE POUR SYSTÈME À CONTRÔLEUR RADIOFRÉQUENCE**

(71) Demandeur: GEMALTO SA, 92190 Meudon (FR)
(72) Inventeur: ZEAMARI, Ali, 13881 Gémenos Cedex (FR); BUTON, Christophe, 13881 Gémenos Cedex (FR); CAPOMAGGIO, Grégory, 13881 Gémenos Cedex (FR)
(74) Mandataire: Milharo, Emilien

(57) **Abrégé**

L'invention concerne un procédé de pilotage de périphérique pour système (1) à contrôleur radiofréquence (SE, 2), ledit pilotage mettant en oeuvre:
- une commande (15a) d'un traitement électronique (40) d'un composant périphérique (4, 5) externe au contrôleur,
caractérisé en ce que le pilotage fait exécuter le traitement électronique (40) du périphérique hors de toute période d'échange de trames radiofréquences (25a, 15b) du contrôleur (SE, 2) avec l'extérieur.

L'invention concerne également le système correspondant.

## Description

### Domaine de l'invention.

L'invention concerne un procédé et système de pilotage de périphérique pour système à contrôleur radiofréquence.

En particulier, l'invention met en oeuvre une commande d'un traitement électronique d'un périphérique externe pendant une session de communication entre le contrôleur et un lecteur radiofréquence.

Elle concerne notamment des cartes de paiement sans-contact biométriques, des cartes à forte valeur ajoutée avec des périphériques divers, tels que capteur biométrique, afficheur, microphone, pavé de signature, interrupteur, clavier, autres microcontrôleurs, générateur de numéro à usage unique, générateur cryptographique, de certificats, moyens de chiffrement / déchiffrement...

L'invention trouve notamment application ou utilisation pour le pilotage de tout périphérique électronique par un contrôleur radiofréquence. De préférence, le fonctionnement de ces contrôleurs et/ou périphériques sont dépendants d'une alimentation en énergie par un champ radiofréquence.

### Art antérieur.

Ces dernières années, des cartes de paiement ont fourni des capacités d'authentification renforcées grâce à l'intégration de capteurs biométriques sur le corps de la carte. Ces cartes utilisent la reconnaissance des empreintes digitales comme alternative au code PIN ou à une signature pour authentifier le titulaire de la carte lors d'une transaction de paiement.

A l'origine, l'authentification biométrique sur la carte se limitait principalement aux cartes à contacts étant donné que les caractéristiques électriques des différents composants, en particulier le capteur d'empreintes digitales, n'était pas compatible avec l'architecture des cartes sans-contact, mettant en oeuvre une très faible consommation de courant, des niveaux de tension faible et des durées de traitement relativement courts afin d'avoir des performances radiofréquences acceptables.

Depuis 2017, l'émergence de nouvelles générations de capteur d'empreintes digitales, en plus du développement d'algorithmes d'extraction / correspondance biométrique optimisés, permet aux fabricants de proposer de l'authentification biométrique sur des cartes à interface duale (contacts et sans contact) ou des cartes purement sans-contact.

En fait, les contrôleurs sécurisés actuels, intégrant des certificats et des applications de paiement, ne sont pas suffisamment puissants pour exécuter le processus d'authentification biométrique, puisque cette opération exige habituellement des unités arithmétiques spécifiques intégrant des calculs à virgule flottante, des capacités de traitement de signal numérique (DSP) et une grande quantité de mémoire RAM.

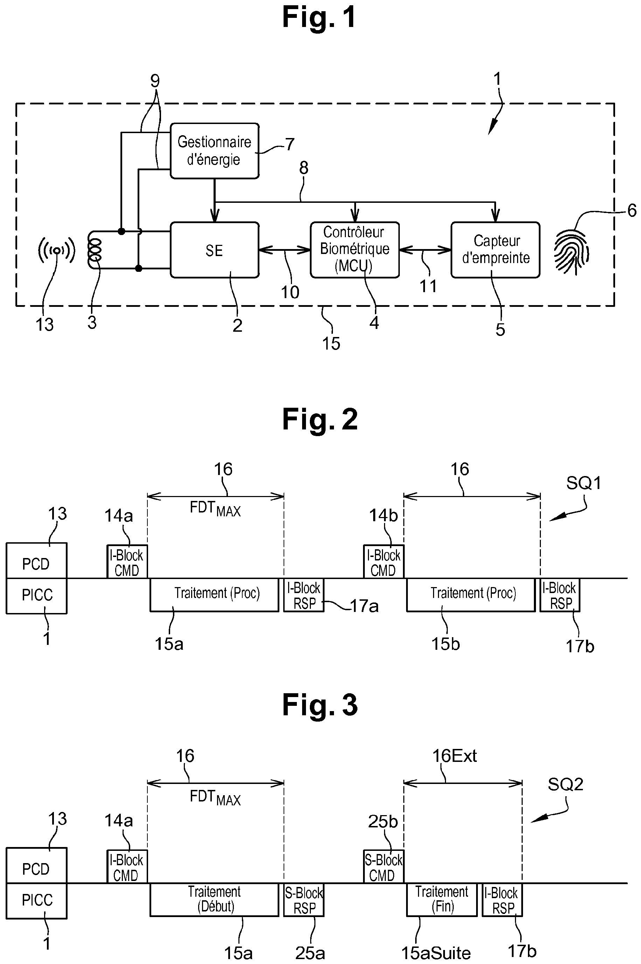

C'est pourquoi presque toutes les cartes sans-contact biométriques s'appuient généralement sur une architecture à double microcontrôleur (contrôleur sécurisé SE + microcontrôleur biométrique MCU), tel que représenté par la figure 1.

Dans une telle architecture, le contrôleur sécurisé SE ordonne le microcontrôleur biométrique de déclencher une séquence biométrique (acquisition - extraction - correspondance) lorsque l'opération de paiement requiert une authentification de l'utilisateur quand le montant est supérieur à 30 euros.

Selon les exigences du protocole sans-contact EMVCo, il apparait qu'une authentification complète d'empreintes digitales demeure encore complexe à réaliser sur une carte sans-contact « alimentée par le champ électromagnétique». En effet, il est bien connu que la génération d'une variation de consommation de courant à l'intérieur de la carte (en raison d'une de traitement du contrôleur par exemple) générera évidemment des perturbations électromagnétiques (généralement appelé EMD) sur l'interface radiofréquence.

Ces perturbations peuvent être vraiment nocives pour la communication sans-contact, surtout si elles se produisent lors d'un échange de trames radiofréquences, conduisant à un problème de communication. Pour éviter ces EMD pendant les échanges de communication, presque tous les systèmes d'exploitation des contrôleurs de cartes sans-contact prévoient d'arrêter toute opération de traitement du contrôleur pour réduire autant que possible la consommation de courant de l'ensemble du système, en cas de communication sans-contact comme décrit à la figure 2.

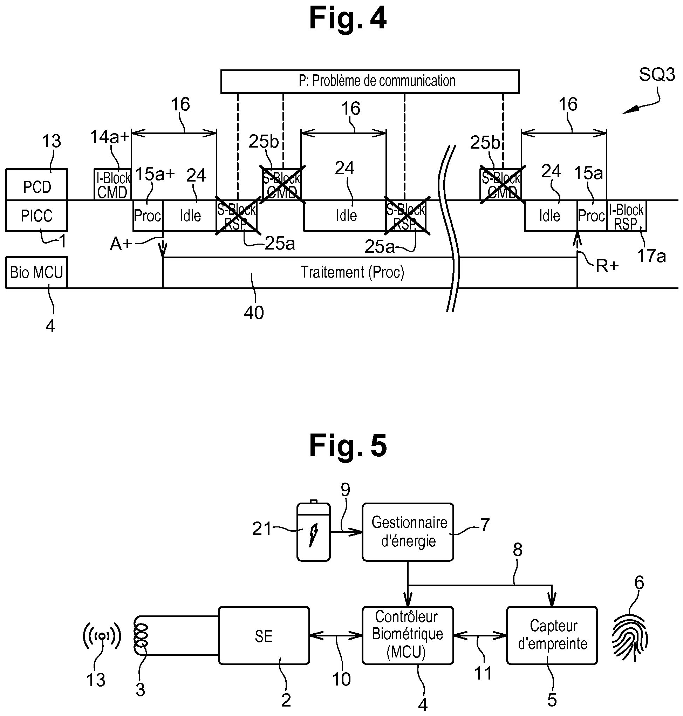

Par ailleurs, illustré à la figure 5, on connait des cartes biométriques comportant des batteries ou des super condensateurs aux structures ci-dessus pour alimenter les composants de la carte lors de pic de consommation. Cependant, l'intégration d'une batterie principale ou de super condensateurs comprend de nombreuses contraintes suivantes pour le fabricant de la carte :
- Augmentation significative de l'empreinte BOM (coût de matière : Bill of material en anglais) et donc du prix de la carte ;
- Les chaînes de montage à la fabrication sont plus complexes ;
- Les cartes à batterie doivent passer des tests de conformité à des interférences électromagnétiques spécifiques (CE - FCC) ;
- La batterie crée généralement un effet écran ou de blindage, réduisant les performances radiofréquences par rapport aux cartes sans batterie ;
- Une durée de vie de la carte avec batterie est limitée du fait de la durée de vie de la batterie.

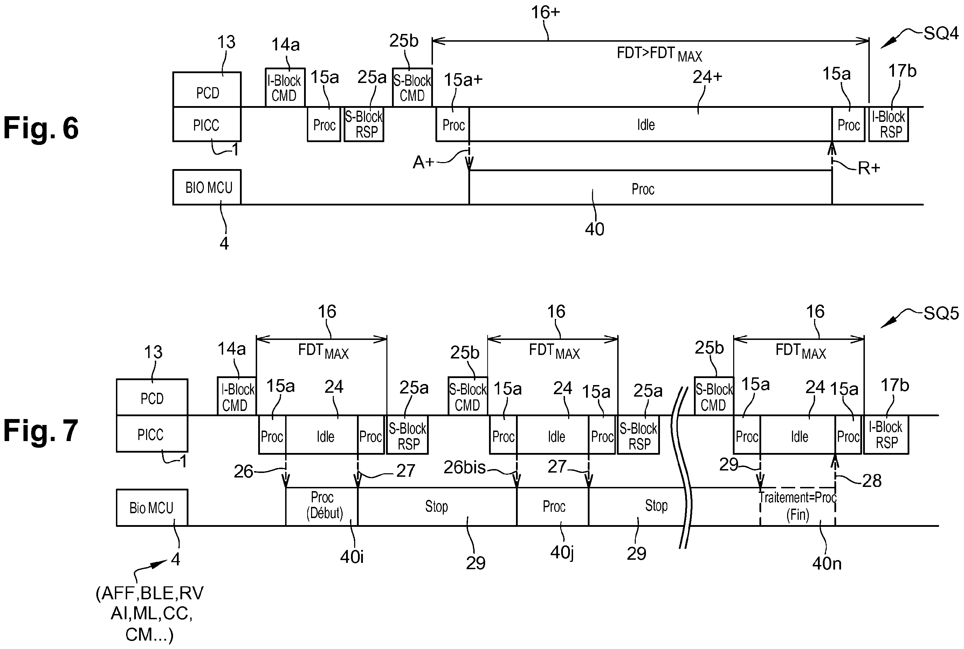

### Alternative au délai de réponse supplémentaire (fig.6)

Le problème rencontré lors d'une authentification biométrique, est expliqué ci-après. On souhaite exécuter une opération d'authentification biométrique qui dure plusieurs centaines de millisecondes ; Or un intervalle de traitement PICC, est à ce jour restreint à 38 millisecondes par le standard EMVCo. Pour résoudre le problème de communication, le demandeur a imaginé d'augmenter le délai de réponse PICC dans sa première génération de carte biométrique, afin d'effectuer l'authentification d'empreinte digitale complète dans un seul intervalle de traitement PICC. En effet, la norme IS014443 permet aux appareils PICC de dimensionner la durée de la prochaine demande de délai supplémentaire FDT en transmettant un facteur multiplicatif (WTXM) dans le délai WTX.

En pratique, cette solution semble être interopérable avec presque tous les terminaux déployés sur le terrain qui acceptent de longues valeurs FDT négociées, mais ne respectent plus la synchronisation FDTMAX définie dans la spécification EMVCo.
En outre, le fait qu'augmenter la durée du FDT nuit aussi à l'expérience utilisateur : en effet, en cas d'erreur (erreur de communication, ou déficit d'énergie occasionnant le redémarrage du SE) durant le traitement de la commande, l'erreur ne sera détectée réellement que plusieurs secondes plus tard par le terminal de paiement (FDT x nombre de tentatives).

### Problème technique.

L'invention a notamment pour objectif de résoudre les inconvénients susvisés.

Elle vise notamment une structure permettant d'éviter les nombreuses contraintes pour le fabricant de la carte tout en préservant une bonne expérience utilisateur avec des transactions sans-échec de communication.

Elle vise une configuration de structure électronique de dispositif radiofréquence avec périphérique sans batterie supplémentaire.

Elle vise également à résoudre un problème rencontré lors d'une authentification biométrique, à savoir : Comment exécuter une opération d'authentification biométrique qui dure plusieurs centaines de millisecondes, hors d'un intervalle de traitement PICC qui est à ce jour restreint à 38 ms par le standard EMVCo.

### Résumé de l'invention.

Les inventeurs ont notamment observé et déduit que le problème d'échec de communication provenait des traitements du périphérique pendant des échanges de trames radiofréquences pour notamment des extensions de délai de traitement ou de réponse nécessaire pour fractionner des traitements longs.
En outre, des échecs peuvent se produire à tout instant dès lors qu'il y a une communication radiofréquence (commande PCD, réponse PICC), fractionnement ou pas...

A cet effet, l'invention a pour objet un procédé de pilotage de périphérique pour système à contrôleur radiofréquence, ledit pilotage mettant en oeuvre une commande de traitement électronique à réaliser par un périphérique, caractérisé en ce que le pilotage fait exécuter ledit traitement électronique pendant au moins une session de communication entre ledit contrôleur et un lecteur radiofréquence et en dehors d'échanges de trames radiofréquences entre ledit contrôleur et ledit lecteur.
Une session de communication peut notamment être bornée au début de la session par la commande du lecteur au contrôleur et à la fin de la session par la réponse du contrôleur à cette commande.

Selon d'autres caractéristiques du procédé,
- Le pilotage fait exécuter ledit traitement électronique sur plusieurs sessions de communication, chacune à délai de réponse imparti FDT ou prolongé WTX ;
- Le contrôleur fait en sorte de ne pas effectuer en même temps, un échange de trame radiofréquence (notamment pour extension de délai de réponse avec le lecteur) et un traitement électronique du périphérique ;
- Le contrôleur peut en outre et de préférence rester inactif pendant que le périphérique exécute le traitement ;
- Autrement dit, le pilotage par le contrôleur peut faire stopper ledit traitement électronique du périphérique pendant des échanges de trames radiofréquences entre ledit contrôleur et ledit lecteur ;
- Des échanges peuvent intervenir notamment pour demander une extension de délai de réponse avant ou juste avant la fin du délai de réponse.

- Les échanges de trames radiofréquences comprennent au moins une demande d'extension de temps de réponse du contrôleur radiofréquence et/ou son accusé réception provenant du lecteur ;

- Le contrôleur peut être configuré pour faire exécuter puis faire stopper ledit traitement électronique par le périphérique pendant une durée impartie d'une session de communication avec le lecteur.
- Le contrôleur peut être configuré pour se mettre en mode inactif ou en mode de consommation réduite pendant le traitement électronique du périphérique.
- Le traitement électronique par le périphérique peut être stoppé pendant des échanges de trame radiofréquences entre le contrôleur et le lecteur.
- Le contrôleur peut être optionnellement configuré pour être réveillé (interface d'interruption matérielle) par le périphérique lorsque ce dernier termine sa session de traitement ou lorsque le traitement complet est terminé.

- La session a une durée impartie (ou s'inscrit dans un intervalle de temps imparti). Elle peut être prorogeable sur requête du contrôleur ;
- Le périphérique est externe au contrôleur ;
- La session peut être délimitée entre l'émission d'une commande du lecteur et la réception d'une réponse du contrôleur par le lecteur ;
- Il comprend au moins une demande d'extension de délai de réponse à la fin ou avant la fin de l'intervalle de temps ou délai de réponse imparti ou standardisé ;
- Le procédé comprend des étapes d'arrêt (26) et de reprise (25a) du traitement électronique afin de fractionner le traitement électronique en portions de traitement (40i, 40j, 40n) entre lesquelles s'effectuent lesdits échanges de trames radiofréquences.

L'invention concerne également un système à contrôleur radiofréquence pour le pilotage d'un périphérique, ledit contrôleur comprenant une instruction de commande de traitement électronique par un périphérique pendant une session de communication entre ledit contrôleur et un lecteur radiofréquence,
caractérisé en ce qu'il est configuré pour faire exécuter ledit traitement électronique en dehors de périodes d'échanges de données entre ledit lecteur et ledit contrôleur.

Bien que l'invention décrive particulièrement la carte sans-contact « biométrique » pour des transactions sécurisées, l'invention vise à protéger tout dispositif sans-contact confrontés au même problème de fonctionnement.

### Brève description des figures.

- La figure 1 illustre une architecture électronique basique de carte biométrique de l'art antérieur ;
- La figure 2 illustre une séquence typique de communication / traitement PCD-PICC ;
- La figure 3 illustre une séquence de demande d'extension WTX de temps de réponse du PICC ;
- La figure 4 illustre un problème communication PCD-PICC causé par une perturbation EMD du traitement biométrique ;
- La figure 5 illustre (alternative à l'invention) une structure de carte de l'art antérieur similaire à celle de la figure 1 mais avec une batterie en plus ;
- La figure 6 illustre (alternative à l'invention) une séquence de demande d'extension WTX de temps de réponse plus longue du PICC ;
- La figure 7 illustre une séquence de communication d'un mode préféré de l'invention avec fonctionnement du temps de traitement biométrique du PICC.

### Description.

Dans les figures, des références identiques d'une figure à une autre se référant à des éléments identiques ou similaires.

A la figure 1, est illustrée une structure ou architecture d'un système électronique 1 d'une carte biométrique de l'art antérieur. Le système 1 comprend un dispositif transpondeur radiofréquence 2, 3 comprenant un microcontrôleur radiofréquence 2 (SE) et une interface à antenne 3 pour une communication radiofréquence et une collecte d'énergie d'origine électromagnétique 13.

Le dispositif transpondeur est configuré pour piloter un périphérique 4, auquel il est relié par une connexion 10. Il peut aussi être configuré pour mesurer une valeur du champ électromagnétique de manière connue de l'homme de l'art.

Le périphérique 4 est constitué ici d'un contrôleur biométrique (MCU) et est relié ici par une connexion 11 à un capteur biométrique 5 pour capter des empreintes digitales 6.
Le système peut comprendre un gestionnaire d'énergie 7 intégré ou non au contrôleur 2. Il peut prélever de l'énergie par branchement 9 en parallèle à l'antenne 3. Le gestionnaire 2 peut gérer les lignes d'alimentation 8 de chaque composant 2, 4, 5.

La structure du système 1 est donc ici à double microcontrôleur (contrôleur sécurisé (2, SE) associé à un microcontrôleur biométrique (4, MCU) et est commune à presque toutes les cartes sans-contact biométriques actuelles.

Une telle structure fonctionne comme ci-après. Lorsque une transaction de paiement requiert une authentification de l'utilisateur (par exemple, avec montant supérieur à 30 euros), le contrôleur sécurisé (2, SE) ordonne le microcontrôleur biométrique (4, MCU) de déclencher une séquence biométrique (par exemple : acquisition - extraction - correspondance).

A la figure 2 (art antérieur) est illustré, une séquence SQ1 typique de communication / traitement PCD-PICC (lecteur 13 - transpondeur radiofréquence 1) avec alternance de traitement ; Dans l'exemple, il peut s'agir de cartes bancaires 1 normales sans-capteur biométriques conformes à la spécification EMVco.

Dans cette séquence SQ1, le lecteur 13 (terminal POS) envoie une commande 14a (I-Block CMD) pendant une transaction bancaire avec la carte bancaire (PICC 1) ;
- Une durée maximale 16 est déclenchée par le lecteur et la carte (contrôleur 2, SE) peut se synchroniser aussi en parallèle grâce à un compteur d'horloge interne ;
- La carte 1 initie un traitement 15a pendant une durée inférieure au délai 16 ; Selon le standard EMVco, la durée maximale 16 entre une commande de lecteur (PCD) et une réponse de dispositif transpondeur (PICC), plus connue sous l'acronyme (FDT) (PICC Frame Delay Time) est actuellement définie par la spécification EMVCo, et cette valeur ne doit pas dépasser 38,7 ms.
Donc, avant la fin du délai 16, la carte 1 renvoie sa réponse 17a (I-Block RSP). Pour éviter des problèmes EMD pendant les échanges de communication, la carte doit cesser le traitement avant la fin du délai 16 pour envoyer sa réponse 17 dans le délai. Les commandes et réponses sont échangées en principe en dehors de la période de traitement du contrôleur 2, SE. La séquence se poursuit de la même manière et ainsi de suite avec des échanges 14b, 15b, 17b.

A la figure 3, (art antérieur) on décrit une séquence d'échanges SQ2 (lecteur PCD - carte PICC) avec de demande d'extension WTX de temps de réponse du PICC.
En effet, dans le cas où un traitement PICC nécessite une plus longue durée de traitement (c'est généralement le cas pour une opération d'authentification biométrique complète qui nécessite quelques centaines ms), le protocole IS014443 fournit un mécanisme de « Prorogation du délai d'attente » (habituellement appelé WTX) qui permet au traitement du PICC d'être fractionné, (découpé ou réparti) sur 2 intervalles ou plus de temps (16, 16 Ext) et/ou de traitement (15a, 15a Suite).

En déroulé de séquence, le lecteur effectue un début d'échange 14a, 15a comme précédemment mais comme le traitement 15a n'est pas terminé, le contrôleur 2 stoppe le traitement 15a avant la fin du délai et envoie une demande d'extension de temps 25a (S-Block RSP) avant la fin du délai imparti (FDT max) 16.
Puis le lecteur envoie une réponse d'accusé réception 25b (S-Block CMD) ce qui permet de reprendre le traitement 15a avec une suite de traitement 15a suite.
Puis à la fin du traitement 15a suite, le contrôleur renvoie la réponse 17b (I-Block RSP) avant la fin de l'extension de délai accordé 16Ext (pouvant être de même durée que le délai initial 16). Ce qui termine la session d'échange entre le lecteur et le dispositif carte 1.

Fondamentalement, ce mécanisme de demande de temps supplémentaire WTX est approprié lorsque le traitement est effectué à l'intérieur du contrôleur sécurisé SE lui-même. Étant donné que le contrôleur sécurisé gère aussi bien le traitement de l'opération 15a, 15b, « 15 Suite » et le protocole ou échanges de communication sans-contact (17a, 25a, 17b) il peut facilement arrêter et redémarrer le traitement en cours de toute opération (fractionnée, découpée) afin de gérer temporairement les demandes de délais supplémentaires.

A la figure 4 (art antérieur avec capteur biométrique 4), on décrit des problèmes de communication PCD-PICC causés par une perturbation EMD du traitement biométrique via une séquence d'échanges SQ3.

Dans ce cas et à l'inverse de la précédente séquence SQ2, le fractionnement (ou découpage) de l'opération biométrique est beaucoup plus difficile puisque ce traitement n'est pas effectué dans le contrôleur sécurisé 2, SE mais dans un microcontrôleur biométrique périphérique 4, MCU qui n'est pas informé des contraintes de protocole sans-contact du SE, 2. Dans ces conditions, l'opération de traitement biométrique 40 peut chevaucher les trames d'échanges (relatifs aux extensions de délai de réponse WTX, générant ainsi en même-temps des perturbations électromagnétiques.

La séquence SQ3 s'initie comme précédemment, mais le lecteur 13 requiert une authentification pendant la session de communication ; Alors le lecteur, envoie à la carte 1 une commande 14a+ avec une authentification au contrôleur 4, MCU ;
Le contrôleur SE de la carte reçoit la commande, commence un traitement 15a+ en interne comprenant l'envoi d'une commande A+ de traitement biométrique sous-traitée au contrôleur biométrique MCU et se met en mode inactif ou de faible consommation ou veille (Idle, 24) de manière connue; Puis, le composant MCU effectue le traitement biométrique 40 à l'aide du capteur 5 ;
Puis, le transpondeur 1 envoie plusieurs demandes d'extension de délai 25a (trame radiofréquence) et le lecteur envoie des réponses correspondantes 25b pendant le traitement 40 ce qui peut provoquer des problèmes (P) de communication par exemple message non transmis ou incomplet au niveau des messages 25a, 25b;

A la fin du traitement 40, le contrôleur MCU, 4 est censé renvoyer le résultat (R+) de l'authentification qui est conditionné par le contrôleur SE, 2 et renvoyé 17a au lecteur.
En fait, cette réponse 17a de la carte peut parvenir hors délai au lecteur 13 car l'une des demandes d'extension de temps 25a peut ne pas avoir abouti correctement dans le délai imparti 16 et la transaction a quand même échoué, le terminal émettant un message d'erreur.

### Alternative avec une architecture à batterie principale (Fig. 5).

Cette figure diffère de la figure 1 en ce qu'elle comprend une batterie 16 pour alimenter le gestionnaire d'énergie 7 au lieu de prélever de l'énergie du champ électromagnétique 13 via la bobine 3.

Afin de résoudre ce problème, les fabricants de cartes de paiement ont décidé d'incorporer une batterie principale 21 à l'intérieur du corps de la carte pour fournir l'énergie nécessaire au circuit biométrique (Fig.5). De cette façon, le contrôleur biométrique et le capteur d'empreintes digitales ne sont plus alimenté par le champ électromagnétique, et le besoin en énergie d'origine électromagnétique dépend seulement de l'activité du contrôleur sécurisé.

A la figure 7, on va décrire maintenant un exemple du mode préféré de mise en oeuvre du procédé de pilotage de périphérique 4, pour système 1 à contrôleur radiofréquence 2, SE, relié à un périphérique 4.
La figure 7 illustre une séquence de communication conforme à un mode préféré du système de l'invention. Le système 1 peut comprendre le contrôleur SE, 2 seul ou avec tout ou partie des éléments 13, 3, 4, 5, 6 décrit à la figure 1.

Selon une caractéristique de ce mode préféré, le pilotage met en oeuvre une commande d'un traitement électronique d'un périphérique pendant une session de communication entre ledit contrôleur et un lecteur radiofréquence.

Dans l'exemple, la commande peut faire partie d'une application logicielle chargée dans une mémoire EEPROM du contrôleur et conçu pour piloter une opération quelconque d'un périphérique quelconque. Le périphérique est ici un contrôleur biométrique connecté en filaire au contrôleur Alternativement, le pilotage peut être un signal déclenché par le SE et interprété par le périphérique.
Dans le cas d'un périphérique sous forme d'afficheur, cela peut être des données à afficher.
Le périphérique peut être un générateur d'OTP (numéro à usage unique qui se déclenche à réception d'une instruction ou signal déclencheur pour calculer ce numéro.
Le périphérique peut être un synthétiseur de parole avec haut-parleur. L'invention peut couvrir les périphériques de communication sans fil (i.e. BLE) qui permettront de transmettre notamment un statut de transaction à l'utilisateur.

Le périphérique 4, 5 est dans l'exemple au sein de la carte (dispositif 1) mais pourrait être externe au dispositif et avoir une liaison de communication quelconque filaire ou par couplage sans-contact inductif ou capacitif.

De préférence, la session de communication est du type commande/réponse entre le lecteur 13 et le dispositif 1. Une session au sens de l'invention débute donc à la commande 14a et se termine à la réponse 17a ou 25a. En cas de prolongation de la session, la demande de prolongation 25a peut constituer une réponse au sens du protocole de communication impliqué dans la session.

Selon une caractéristique du mode préféré, le pilotage fait exécuter le traitement électronique 40 par le périphérique 4, 5, en dehors de toutes les périodes d'échanges de données 15a, 25a, 17b entre le lecteur 13 et le contrôleur SE, 2.

Ainsi, grâce à l'invention, le traitement électronique 40 effectué par le périphérique 4, 5 et générateur de EMD ne perturbe pas les trames radiofréquences échangées par le contrôleur SE, 2 avec le lecteur sans-contact du dispositif 1 pendant une session de communication entre le contrôleur SE, 2 et le lecteur.

Dans l'exemple, les échanges de trames radiofréquences peuvent comprendre des commandes de lecteur 15a, 15a+ mais surtout les réponses du contrôleur SE, 2 notamment de demande d'extension de délai de réponse.

Selon une caractéristique, la session comprend un délai (ou un intervalle de temps) imparti qui peut être surveillé par le lecteur.

Dans l'exemple, il s'agit de la durée de 38,7 ms du standard EMVco mais il peut être tout autre.

Le cas échéant, la session peut même ne pas avoir de délai imparti. L'important dans l'invention pour ne pas subir de perturbation EMD est de ne pas effectuer de traitement électronique important perturbateur, par un périphérique quelconque du contrôleur SE pendant une communication radiofréquence de l'élément ou contrôleur de sécurité SE, 2.

Selon une caractéristique du mode préféré, l'invention prévoit dans un cas particulier de contrôle biométrique, de fournir un mécanisme de découpage (ou fractionnement) de durée, contrôlée par l'élément sécurisé (SE), afin de faire exécuter / stopper le traitement biométrique en cours d'exécution et correspondant à une commande du contrôleur (notamment une commande d'authentification biométrique).

Cette caractéristique ci-dessus est illustrée ci-après.
A la figure 7, la séquence SQ5 se déroule comme ci-après :
- Le lecteur 13 envoi une commande d'authentification 14a à la carte 1 et actionne un compteur de temps maximal 16 de session ;
- La carte 1 débute le traitement de la commande 15a, met en oeuvre une application logicielle par exemple bancaire EMVco, et transmet une commande ou instruction 26 d'authentification au périphérique 4 biométrique MCU ;
- Ensuite, le contrôleur « SE » se met en mode inactif 24 (idle) ou en mode de consommation réduit (ou faible) et le périphérique débute un traitement d'authentification 40i; Ce traitement fait partie d'un traitement complet 40 fractionné (ou découpé) en traitement électronique 40i, 40j, 40n.
- Puis, au bout d'un certain temps, inférieur au temps imparti 16, le contrôleur envoie une commande 27 d'arrêt du traitement au périphérique et envoie une requête d'extension de délai de réponse au lecteur 25a;
- Le lecteur retourne un accusé réception 25b à la carte qui la traite en transmettant au périphérique biométrique 4, un signal ou instruction afin de poursuivre le traitement 40 par un second traitement 40j ;
On observe que le traitement du périphérique 40i a été interrompu, suspendu pour permettre au contrôleur radiofréquence (ou transpondeur radiofréquence) de transmettre ou de recevoir des trames de communication radiofréquences 2(a, 25b ;
- la séquence SQ5 se poursuit de la même manière pour exécuter les suites fractionnées du traitement 40j-40n et à la fin du traitement 40n,
- Le périphérique 4 renvoi un résultat d'authentification et/ou signal ou message de fin de traitement 28 et toujours à l'intérieur du délai de réponse imparti étendu 16 ;
- Le contrôleur SE, 2 retourne la réponse d'authentification 17b au lecteur ce qui termine la séquence.

Dans ce mode préféré de l'invention, le MCU biométrique a exécuté l'opération de traitement électronique ou biométrique uniquement pendant les intervalles PICC FDT ; le reste du temps le MCU biométrique et le capteur d'empreintes digitales basculent en mode de faible puissance afin de réduire la consommation de courant de l'ensemble du système au cours des phases de communication sans-contact (voir figure 7).

Ainsi, comme illustré, l'invention permet de spécifier un mécanisme (ou un programme) générique pour synchroniser le fonctionnement du contrôleur biométrique (ou de tout périphérique) ici dans l'exemple, dans le délai de réponse imparti au PICC.

Dans la mesure où le S-Block (WTX), (transmis par le lecteur PCD, pour accuser réception de la demande d'extension de délai de réponse du PICC), est indépendant de l'implémentation matérielle/logicielle du lecteur (non déterministe), le contrôleur sécurisé SE est évidemment responsable du contrôle de la reprise d'activation 26bis du traitement biométrique.

Alternativement, l'invention peut prévoir, un déclencheur matériel externe pour commander une ligne numérique ou pour transmettre une séquence de commande pour le MCU biométrique via l'interface de communication du contrôleur.

A l'inverse, on peut rajouter une notification matérielle externe (MCU -> SE) permettant au MCU biométrique de notifier le contrôleur :
- De la fin d'un intervalle de traitement (si le MCU est équipé d'une horloge interne capable de déterminer le temps de traitement).
- De la fin du processus d'authentification biométrique.
Étant donné que la durée d'un intervalle de traitement biométrique est à l'opposé déterministe (synchronisation fixe prédéfinie inférieure à FDTmax), le processus de désactivation (27) du traitement biométrique (ou tout autre traitement périphérique) peut être :
- contrôlé par le contrôleur sécurisé SE en utilisant les mêmes caractéristiques matérielles utilisées pour l'activation 26, ou reprise d'activation 26bis du traitement biométrique ;
- contrôlé par le MCU biométrique (tout autre périphérique) par exemple avec une horloge temps réel RTC ou un circuit compteur interne ou externe.

Ainsi, le procédé selon une caractéristique générale à tous les modes, peut comprendre des étapes d'arrêt 27 et de reprise 26bis du traitement électronique afin fractionner le traitement électronique (total) 40 en portions de traitement (40i, 40j, 40n) entre lesquelles peut s'effectuer des échanges de trames radiofréquences.

Par ailleurs, la durée du traitement biométrique complet 40 étant généralement non déterministe (durée de la phase d'acquisition ou d'extraction peut dépendre de la qualité de l'empreinte du doigt), l'invention peut prévoir également un mécanisme (ou programme) pour le MCU biométrique 4 configuré pour avertir le contrôleur sécurisé SE, 2 lorsque l'opération d'authentification est terminée (voire notifier le MCU avant la fin de chaque intervalle de traitement) et pour retourner le résultat 28 de la comparaison. Cette notification 28 pourrait se faire à travers une connexion de matériel externe ou via l'interface de communication connectée au contrôleur sécurisé SE.

Dans d'autres utilisations ou configurations possible, visées par l'invention, le périphérique pourrait être tout autre composant électronique. Par exemple et de manière non limitative, le périphérique 4, 5 peut comprendre un afficheur (AF) ou un composant électronique de communication (BLE), un composant de reconnaissance vocale RV, un composant d'intelligence artificielle AI et/ou d'apprentissage autonome ML, un composant de collecte CC et de mémorisation de données CM.

## Revendications

1. Procédé de pilotage de périphérique pour système (1) à contrôleur radiofréquence (SE, 2), ledit pilotage mettant en oeuvre :
- une commande (15a) d'un traitement électronique (40) d'un composant périphérique (4, 5) externe au contrôleur,
**caractérisé en ce que** le pilotage fait exécuter le traitement électronique (40) du périphérique hors de toute période d'échange de trames radiofréquences (25a, 15b) du contrôleur (SE, 2) avec l'extérieur.

2. Procédé selon la revendication précédente, **caractérisé en ce qu'**il comprend au moins une demande d'extension de délai de réponse (25a) à la fin de l'intervalle de temps imparti (16).

3. Procédé selon l'une des revendications précédentes, **caractérisé en ce que** le pilotage fait exécuter ledit traitement électronique (40) sur plusieurs sessions de communication (14a-25a, 25b-17b), chacune à délai de réponse (16) imparti ou prolongé.

4. Procédé selon l'une des revendications précédentes, **caractérisé en ce que**
le contrôleur (SE, 2) fait en sorte de ne pas effectuer en même-temps, un échange de trames radiofréquences (25a, 25b) et un traitement électronique (40) du périphérique (4, 5).

5. Procédé selon l'une des revendications précédentes, **caractérisé en ce que** le contrôleur (SE, 2) peut en outre rester inactif ou en mode de consommation réduit (24) pendant que le périphérique (4, 5) exécute le traitement (40).

6. Procédé selon l'une des revendications précédentes, **caractérisé en ce que** le pilotage par le contrôleur est configuré pour faire stopper ledit traitement électronique du périphérique pendant des échanges de trames radiofréquences entre ledit contrôleur et ledit lecteur.

7. Procédé selon l'une des revendications précédentes, **caractérisé en ce que** des échanges interviennent pour demander une extension de délai de réponse avant ou juste avant la fin du délai de réponse.

8. Procédé selon l'une des revendications précédentes, caractérisé en ce les échanges de trames radiofréquences comprennent au moins une demande d'extension de temps de réponse du contrôleur radiofréquence et/ou son accusé réception provenant du lecteur.

9. Procédé selon l'une des revendications précédentes, **caractérisé en ce que**
le contrôleur est configuré pour faire exécuter puis faire stopper ledit traitement électronique par ledit périphérique pendant une durée impartie d'une session de communication avec l'extérieur.

10. Procédé selon l'une des revendications précédentes, **caractérisé en ce que** ledit contrôleur est configuré pour se mettre en mode inactif ou en mode de consommation réduite, pendant le traitement électronique (40) du périphérique.

11. Procédé selon l'une des revendications précédentes, **caractérisé en ce que** ledit traitement électronique (40) par le périphérique est stoppé (27) par une commande du contrôleur avant des échanges de trames radiofréquences (25a, 25b ou en arrêt (29) pendant ces échanges du contrôleur (SE, 2) avec l'extérieur.

12. Procédé selon l'une des revendications précédentes, **caractérisé en ce que** ladite session a une durée impartie ou s'inscrit dans un intervalle de temps imparti.

13. Procédé selon l'une des revendications précédentes, **caractérisé en ce que** ladite durée impartie (16) est modifiée (24+) sur requête du contrôleur (SE, 2).

14. Procédé selon l'une des revendications précédentes, **caractérisé en ce que** ladite session peut être délimitée entre l'émission d'une commande (14a, 25b) du lecteur (13) et la réception d'une réponse (25a, 17b) du contrôleur par le lecteur.

15. Procédé selon l'une des revendications précédentes, **caractérisé en ce qu'**il comprend au moins une demande d'extension de délai de réponse (25a) à la fin ou avant la fin de l'intervalle de temps ou délai de réponse (16) imparti ou standardisé.

16. Procédé selon l'une des revendications précédentes, **caractérisé en ce qu'**il comprend des étapes d'arrêt (26) et de reprise (25a) du traitement électronique afin fractionner le traitement électronique en portions de traitement (40i, 40j, 40n) entre lesquelles s'effectue lesdits échanges de trames radiofréquences.

17. Système (1) à contrôleur radiofréquence (SE,2) pour le pilotage d'un périphérique (4, 5), ledit contrôleur comprenant une instruction de commande (15a) de traitement électronique (40) pour ledit périphérique, **caractérisé en ce qu'**il est configuré pour faire exécuter ledit traitement électronique (40) par ledit périphérique (4, 5) en dehors de périodes d'échanges de trames de données radiofréquences (25a, 26b) du contrôleur (SE, 2) avec l'extérieur.

18. Système selon l'une la revendication précédente, **caractérisé en ce que** ledit périphérique (4, MCU) comprend un contrôleur (4, MCU) configuré pour effectuer un traitement de données biométriques.

19. Système selon l'une des revendications 16 ou 17, **caractérisé en ce que** ledit périphérique (4, MCU) comprend un composant choisi parmi :
- un afficheur (AF) ou un composant électronique de communication (BLE), un composant de reconnaissance vocale (VC), un composant d'intelligence artificielle (AI) et/ou d'apprentissage autonome (ML), un composant de collecte (CC) et de mémorisation de données (CM).
